Europäisches Patentamt

European Patent Office

Office européen des brevets

(11) Veröffentlichungsnummer: **0 031 587**
**B1**

(12) # EUROPÄISCHE PATENTSCHRIFT

(45) Veröffentlichungstag der Patentschrift:
02.11.83

(51) Int. Cl.³: **F 24 D 19/02, F 16 L 3/22**

(21) Anmeldenummer: **80108154.8**

(22) Anmeldetag: **23.12.80**

(54) **Heizkörperhalterung.**

(30) Priorität: **27.12.79 DE 2952481**

(43) Veröffentlichungstag der Anmeldung:
**08.07.81 Patentblatt 81/27**

(45) Bekanntmachung des Hinweises auf die Patenterteilung:
**02.11.83 Patentblatt 83/44**

(84) Benannte Vertragsstaaten:
**AT BE CH FR GB IT LI LU NL SE**

(56) Entgegenhaltungen:
**DE - A - 1 926 147**
**DE - A - 2 129 239**
**DE - A - 2 632 119**
**DE - C - 551 718**
**DE - C - 621 940**

**Die Akte enthält technische Angaben, die nach dem Eingang der Anmeldung eingereicht wurden und die nicht in dieser Patentschrift enthalten sind.**

(73) Patentinhaber: **Mayer, Helmut, Ravensburger Strasse 18, D-7778 Markdorf (DE)**

(72) Erfinder: **Mayer, Helmut, Ravensburger Strasse 18, D-7778 Markdorf (DE)**

(74) Vertreter: **Wuesthoff, Franz, Dr.-Ing. et al, Patentanwälte Wuesthoff -v. Pechmann-Behrens-Goetz Schweigerstrasse 2, D-8000 München 90 (DE)**

Heizkörperhalterung

Die Erfindung betrifft eine Heizkörperhalterung mit einer an einem Wanddübel abstützbaren oder anhängbaren Platte und einer Schraube, die sich durch die Platte und das Gegenstück hindurcherstreckt, wobei das Gegenstück eine an der Platte abgestützte Brücke und zwei durch die Brücke miteinander verbundene Spreizbacken aufweist, die einen auf der Schraube angeordneten Spreizkörper zwischen sich aufnehmen und durch Anziehen der Schraube voneinander weg gegen benachbarte Heizkörperrohre oder -rippen spreizbar sind. Eine solche Heizkörperhalterung ist aus dem deutschen Patent 2 632 119 bekannt.

Bei einer Ausführungsform der bekannten Heizkörperhalterung hat die Schraube in der Art einer Senkschraube einen kegelstumpfförmigen Kopf, der beim Festziehen der Schraube zwischen die Spreizbacken eindringt und als Spreizkörper dient. Die erreichbare Spreizung der Spreizbacken hängt bei dieser Ausführungsform vom Kopfdurchmesser der Schraube ab. Dieser Durchmesser muss möglichst gross gewählt werden, damit die Spreizbacken zwischen Heizkörperrohren mit möglichst grossem Abstand verspreizt werden können; andererseits muss der Kopfdurchmesser aber auch klein genug sein, um das Einführen der Heizkörperhalterung zwischen einander eng benachbarten Heizkörperrohren noch zu ermöglichen.

Der Erfindung liegt die Aufgabe zugrunde, die Heizkörperhalterung der eingangs beschriebenen Gattung derart weiterzubilden, dass sie sich nach wie vor zwischen einander eng benachbarte Heizkörperrohre einführen lässt, andererseits aber auch ein zuverlässiges Verspreizen der Spreizbacken zwischen Heizkörperrohren von erheblich grösserem Abstand ermöglicht.

Die Aufgabe ist erfindungsgemäss dadurch gelöst, dass der Spreizkörper ein Durchgangsloch aufweist, in dem die Schraube längsverschiebbar ist und der Spreizkörper ferner an seiner von der Platte abgewandten Seite einen in der Mittelebene zwischen den Spreizbacken liegenden Längsschlitz aufweist und beim Festziehen der Schraube durch deren in den Spreizkörper eindringenden Kopf spreizbar ist.

Die Dicke des Spreizkörpers im ungespreizten Zustand braucht nicht grösser zu sein und kann sogar kleiner sein als der Kopfdurchmesser der Schraube. Der Kopf der Schraube, der vorzugsweise konisch ist, wirkt beim Festziehen der Schraube nicht mehr unmittelbar auf die Spreizbacken ein, sondern er dringt in den Spreizkörper ein, so dass dieser gespreizt wird und die Spreizbacken auseinanderdrückt. Dadurch kann der Spreizkörper eine Dicke erreichen, die erheblich grösser ist als dessen ursprüngliche Dicke und der Kopfdurchmesser der Schraube.

Bei einer bevorzugten Ausführungsform der Erfindung weist das Durchgangsloch des Spreizkörpers in seinem von der Platte abgewandten Endbereich eine zum Kopf der Schraube komplementäre kegelförmige Erweiterung auf. Durch diese Gestaltung wird das Hineinziehen des Schraubenkopfes in den Spreizkörper erleichtert und werden überhöhte Flächenpressungen vermieden.

Wenn die Spreizbacken wie beim Gegenstand des Patents ein im Querschnitt durch die Schraube U-förmiges Profil aufweisen, dann ist es vorteilhaft, wenn gemäss einer Weiterbildung der Erfindung der Spreizkörper einen dem U-förmigen Profil der Spreizbacken entsprechenden Rechteckquerschnitt hat. Dadurch ist der Spreizkörper einerseits zuverlässig zwischen den Backen geführt und versteift diese andererseits in besonders wirksamer Weise.

Ein Ausführungsbeispiel der Erfindung wird im folgenden anhand schematischer Zeichnungen erläutert. Es zeigt:

Fig. 1 die Einzelteile einer erfindungsgemässen Heizkörperhalterung in auseinandergezogener perspektivischer Darstellung,

Fig. 2 den Schnitt in der senkrechten Ebene II-II in Fig. 1,

Fig. 3 zwei halbseitige Schnitte in den waagerechten Ebenen III-III in Fig. 2,

Fig. 4 die Draufsicht der montierten Heizkörperhalterung, und

Fig. 5 den Schnitt in der senkrechten Ebene V-V in Fig. 4.

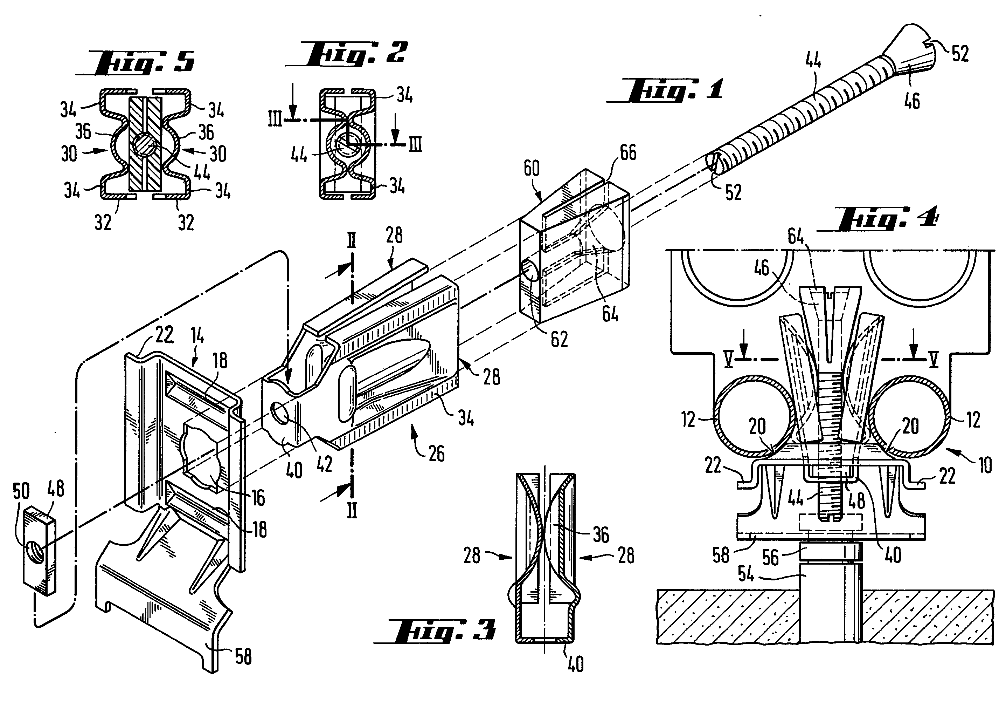

Die in Fig. 1 einzeln dargestellten Bauteile bilden eine Heizkörperhalterung 10, die gemäss Fig. 4 zwischen zwei Röhren 12 eines Röhrenheizkörpers oder auch zwischen zwei Rippen nicht dargestellter Rippenheizkörper verschiedener Grösse zu befestigen ist.

Zur Heizkörperhalterung 10 gehört eine Platte 14, die im dargestellten Beispiel aus Blech gestanzt und gebogen ist und eine zentrale Aussparung 16 aufweist. Die Aussparung 16 hat die Form eines Kreises, dem ein Quadrat überlagert ist. Parallel zu den waagerechten Kanten des Quadrats ist über und unter der Aussparung 16 je eine Quersicke 18 angeordnet. Hinter den Enden der Quersicken 18 weist die Platte 14 Stützflächen 20 für die Heizkörperrohre 12 auf. Unmittelbar ausserhalb der Stützflächen 20 ist die Platte 14 abgestuft, wodurch ein zweites Paar Stützflächen 22 für kleine Heizkörperrippen gebildet ist.

Zur Heizkörperhalterung 10 gehört ferner ein Gegenstück 26, das im dargestellten Beispiel ein im wesentlichen prismatisches Blechteil ist und zwei im Querschnitt etwa U-förmige Spreizbacken 28 mit je einem Steg 30 und je zwei Schenkeln 32 aufweist. Der Steg 30 jeder Spreizbacke 28 bildet mit seiner Aussenseite eine Stützfläche 34, die quergeriffelt ist und einen nach innen gezogenen Bereich 36 von M-förmigem Querschnitt rahmenförmig umschliesst.

Die beiden Spreizbacken 28 sind in einem Stück derart hergestellt, dass sie durch eine Brücke 40 miteinander verbunden sind. Der Umriss der Brücke 40 entspricht gemäss Fig. 1 demjenigen der zentralen Aussparung 16 der Platte 14 derart, dass die Brücke 40 gemäss Fig. 4 durch die Aussparung 16 hindurchsteckbar ist. Die Brücke 40 weist ihrerseits ein zentrales Loch 42 auf.

Zwischen den im Querschnitt M-förmigen, nach innen gezogenen Bereichen 36 der Spreizbacken 28 ist gemäss Fig. 2 und 4 eine Schraube 44 geführt, die an ihrem von der Brücke 40 entfernten Ende einen konischen Kopf 46 aufweist. In den Zwischenraum zwischen der durch die zentrale Aussparung 16 hindurchgesteckten Brücke 40 und der Platte 14 ist eine Scheibe 48 eingeschoben, deren im dargestellten Beispiel rechteckiger Umriss so gestaltet ist, dass die Brücke 40 sich über die Scheibe 48 an der Platte 14 abstützen kann, also dagegen gesichert ist, durch die zentrale Aussparung 16 zurückgezogen zu werden. Die Scheibe 48 weist ein Loch 50 auf, das im dargestellten Beispiel ein Gewindeloch ist. Die Schraube 44 ist durch dieses Loch 50 hindurchgeschraubt und erstreckt sich ferner durch das Loch 42 der Brücke 40, das im dargestellten Beispiel ein Durchgangsloch ist.

Eine Abwandlung des Dargestellten kann darin bestehen, dass das Loch 50 ein Durchgangsloch und das Loch 42 ein Gewindeloch ist.

Die Schraube 44, die an ihrem Kopf 46 und an ihrem entgegengesetzten Ende je einen Schlitz 52 für einen Schraubenzieher aufweist, erstreckt sich durch einen Spreizkörper 60 hindurch, der zu diesem Zweck ein Durchgangsloch 62 aufweist. Der Spreizkörper 62 hat gemäss Fig. 1, 4 und 5 einen keilförmigen Querschnitt und verjüngt sich in gleicher Richtung wie der Kopf 46 der Schraube 44, nämlich in Richtung zur Platte 14 hin, so dass er sich durch Festziehen der Schraube 44 zwischen die Spreizbacken 28 hineinziehen lässt. Das Durchgangsloch 62 des Spreizkörpers 60 weist in seinem von der Platte 14 abgewandten Endbereich eine zum Kopf 46 der Schraube 44 komplementäre kegelförmige Erweiterung 64 auf. Der Spreizkörper 60 hat ferner an seiner von der Platte 14 abgewandten Seite einen in der Mittelebene zwischen den beiden Spreizbacken 28 liegenden Längsschlitz 66.

Die Spreizbacken 28 sind gemäss Fig. 3 zunächst parallel angeordnet. Wenn aber die Schraube 44 angezogen wird, zieht deren Kopf 46 den Spreizkörper 60 zwischen die Spreizbacken 28 hinein, wodurch diese gemäss Fig. 4 gespreizt werden. Infolge des Widerstandes, den die Spreizbacken 28 dem Spreizkörper 60 entgegensetzen, verschiebt sich die Schraube 44, wenn sie stärker angezogen wird, innerhalb des Spreizkörpers 60, so dass dieser durch den weiter in ihn eindringenden Kopf 46 der Schraube 44 nun seinerseits gespreizt wird, während er weiter zwischen die nach innen gezogenen Bereiche 36 der Spreizbacken 28 eindringt. Die Spreizbacken 28 werden dadurch besonders stark auseinandergespreizt und mit ihren Stützflächen 34 fest gegen die Röhren 12 des Heizkörpers gepresst. Die dabei entstehenden Reaktionskräfte bewirken, dass die Platte 14 mit ihren Stützflächen 22 an die Röhren 12 gepresst wird.

Die dadurch erzielte feste Verbindung zwischen der Heizkörperhalterung 10 und dem Heizkörper ermöglicht es, den Heizkörper über zwei oder mehrere in Abständen angeordnete Heizkörperhalterungen 10 an einer entsprechenden Zahl von Wanddübeln 54 gemäss Fig. 4 abzustützen. Die Wanddübel 54 können zu diesem Zweck ein Kopfstück 56 mit einer Ringnut aufweisen, in die ein Flansch 58 der Platte 14 eingreift.

## Patentansprüche

1. Heizkörperhalterung (10) mit einer an einem Wanddübel (54) abstützbaren oder anhängbaren Platte (14), einem Gegenstück (26) und einer Schraube (44), die sich durch die Platte (14) und das Gegenstück (26) hindurcherstreckt, wobei das Gegenstück (26) eine an der Platte (14) abgestützte Brücke (40) und zwei durch die Brücke (40) miteinander verbundene Spreizbacken (28) aufweist, die einen auf der Schraube (44) angeordneten Spreizkörper (60) zwischen sich aufnehmen und durch Anziehen der Schraube (44) voneinander weg gegen benachbarte Heizkörperrohre oder -rippen spreizbar sind, dadurch gekennzeichnet, dass der Spreizkörper (60) ein Durchgangsloch (62) aufweist, in dem die Schraube (44) längsverschiebbar ist und der Spreizkörper (60) ferner an seiner von der Platte (14) abgewandten Seite einen in der Mittelebene zwischen den beiden Spreizbacken (28) liegenden Längsschlitz (66) aufweist und beim Festziehen der Schraube (44) durch deren in den Spreizkörper (60) eindringenden Kopf (16) spreizbar ist.

2. Heizkörperhalterung nach Anspruch 1, dadurch gekennzeichnet, dass das Durchgangsloch (62) des Spreizkörpers (60) in seinem von der Platte (14) abgewandten Endbereich eine zum Kopf (46) der Schraube (44) komplementäre kegelförmige Erweiterung (64) aufweist.

3. Heizkörperhalterung nach Anspruch 1 oder 2, deren Spreizbacken (28) ein im Querschnitt durch die Schraube (44) U-förmiges Profil aufweisen, dadurch gekennzeichnet, dass der Spreizkörper (60) einen dem U-förmigen Profil der Spreizbacken (28) entsprechenden Rechteckquerschnitt hat.

## Revendications

1. Support de radiateur (10) comportant une plaque (14) pouvant être appuyée sur ou suspendue à une cheville murale (54), une pièce antagoniste (26) et une vie (44), qui s'étend à travers la plaque (14) et à travers la pièce antagoniste (26), la pièce antagoniste (26) comportant un étrier (40) prenant appui sur la plaque (14) et deux mâchoires d'écartement (28) reliées entre elles par l'intermédiaire de l'étrier (40) et qui logent entre elles un organe d'écartement (60) monté sur la vis (44) et peuvent être écartées l'une de l'autre, par suite du serrage de la vis (44), contre des tubes ou des ailettes voisins de radiateur, caractérisé en ce que l'organe d'écartement (60) comporte un trou traversant (62), dans lequel la vis (44) est déplaçable longitudinalement et que l'organe d'écartement (60) comporte en outre sur son côté, tourné à l'opposé de la plaque (14), une fente longitudinale (66) située dans le plan médian entre les deux mâchoires d'échartement (28) et peut être déployé, lors du serrage de la vis (44), par la tête (16) de cette dernière, pénétrant dans l'organe d'écartement (60).

2. Support de radiateur suivant la revendication 1, caractérisé en ce que le trou traversant (62) de l'organe d'écartement (60) possède, dans sa partie d'extrémité tournée à l'opposé de la plaque (14), un élargissement conique (64) complémentaire de la tête (46) de la vis (44).

3. Support de radiateur selon la revendication 1 ou 2, dont les mâchoires de serrage (28) possèdent un profil en forme de U selon une section transversale passant par la vis (44), caractérisé en ce que l'organe d'écartement (60) possède une section transversale rectangulaire correspondant au profil en forme U des mâchoires de serrage (26).

## Claims

1. A support (10) for a radiator comprising a plate (14) adapted to rest against a wall plug (54) or to be attached thereto, a counter piece (26) and a screw (44) extending through the plate (14) and the counter piece (26), the counter piece (26) including a bridge (40) resting agains the plate (14), and two spread-ing jaws (28) connected with each other by means of the bridge (40), said spreading jaws receiving between each other a spreading member (60) disposed on the screw (44) and being adapted to be spread away from each other towards adjacent radiator tubes or ribs, in response to tightening of the screw (44) characterized in that the spreading member (60) has a through hole (62) in which the screw (44) is slidable in longitudinal direction, and the spreading member (60) has furthermore, at its side averted from the plate (14), a longitudinal slot (66) disposed in the center plane between the two spreading jaws (28) and may be spread upon tightening of the screw (44) by virtue of the head (16) thereof penetrating the spreading member (60).

2. The support as claimed in claim 1, characterized in that the through hole (62) of the spreading member (60) has in its end region being averted from the plate (14) a conical enlargement (64) complementary to the head (46) of the screw (44).

3. The support as claimed in claim 1 or claim 2 whose spreading jaws (28) have a U-shaped section in cross section through the screw (44) characterized in that the spreading member (60) has a rectangular cross section corresponding to the U-shaped section of the spreading jaws (28).

**Fig. 1**

**Fig. 2**

**Fig. 3**

**Fig. 4**

**Fig. 5**